# EUROPÄISCHE PATENTSCHRIFT

(11) **EP 1 798 537 B1**
(45) Veröffentlichungstag und Bekanntmachung des Hinweises auf die Patenterteilung: **23.07.2014**
(21) Anmeldenummer: 06016185.8
(22) Anmeldetag: 03.08.2006
(51) Int. Cl.: G01M 11/00

(54) **Verfahren der Kalibrierung einer Vorrichtung zur Endkontrolle von Lichtwellenleitern mit Ferrulen**
Method of calibration of a device for final checking of lightguides with ferrules
Procédé de la calibration d'un appareil d'inspection final pour guides d'ondes avec viroles

(30) Priorität: 17.12.2005 DE 102005060460
(43) Veröffentlichungstag der Anmeldung: 20.06.2007
(73) Patentinhaber: Schäfer Werkzeug- und Sondermaschinenbau GmbH, 76669 Bad Schönborn (DE)
(72) Erfinder: Neubauer, Stefan, 67166 Otterstadt (DE)
(74) Vertreter: HOFFMANN EITLE

(56) Entgegenhaltungen:
- EP-A- 0 246 691
- GB-A- 2 005 013
- JP-A- 61 258 138
- US-A- 5 592 284
- US-B1- 6 204 924

## Beschreibung

### Technisches Gebiet

Die Erfindung betrifft ein Verfahren zur Kontrolle von Lichtwellenleitern, die an den Enden mit Ferrulen bestückt sind und einen Lichtleitkörper von kreisförmig begrenztem Profil enthalten, umfassend einen Sender mit einem Signalgeber und einen Empfangen mit einem Signalempfänger (5), die mit Anschlussdosen versehen sind, in die die Ferrulen (3) signalleitend einführbar sind.

### Stand der Technik

Eine Vorrichtung für ein solches Verfahren ist bekannt. Sie erbringt insbesondere bei der Kontrolle von Lichtwellenleitern mit runden Lichtleitkörpern aus Glas eines Durchmessers von 0,4 mm, die zunehmend zur Anwendung gelangen, keine reproduzierbaren Ergebnisse. Es kommt daher immer wieder vor, dass gute Teile als "Ausschuss" verworfen und schlechte Teile als "gut" eingestuft werden.

Aus der US6204924B1 ist eine Vorrichtung zur Kontrolle von Lichtwellenleiter mit Lichtleitkörper eines runden Profils bekannt, die einen Sender mit einem Signalgeber und einen Empfänger mit einem Signalempfänger umfasst, wobei der Sender und der Empfänger mit Anschlussdosen versehen sind, in die die Ferrulen signalleitend einführbar sind, wobei weiterhin der Signalsender und der Empfänger konzentrisch auf die Mitte der Anschlussdosen und damit auf den Außenumfang einer formschlüssig in diese eingesteckten Ferrule ausgerichtet sind. Ferner sind dabei Kollimatoren konzentrisch zueinander und die Anschlussdosen konzentrisch zu diesen ausgerichtet.

Aus der US5592284A und der JP612581138A sind Vorrichtungen zur Kontrolle von Lichtwellenleiter mit einem Lichtleitkörper von rundem Profil bekannt, die mit Ferrulen bestückt sind, wobei die Vorrichtung einen Sender mit einem Signalgeber und einen Empfänger mit einem Signalempfänger umfasst, wobei der Sender und der Empfänger mit Anschlussdosen versehen sind, in die die Ferrulen signalleitend einführbar sind, wobei der Signalsender und der Signalempfänger konzentrisch auf die Mitte der Anschlussdosen und damit auf den Außenumfang einer formschlüssig in diese eingesteckten Ferrule ausgerichtet sind.

### Darstellung der Erfindung

Der Erfindung liegt die Aufgabe zu Grunde, ein Verfahren zur Kontrolle von Lichtwellenleitern derart weiter zu entwickeln, dass auch bei der Kontrolle von runden Lichtwellenleitern eines Durchmessers von max. 0,4 mm, vorzugsweise eines Durchmessers von max. 0,2 mm, reproduzierbare Messwerte erhalten werden, die einen fehlerfreien Rückschluss auf die Qualität des untersuchten Lichtwellenleiters zulassen.

Diese Aufgabe wird erfindungsgemäß mit einem Verfahren gemäß Anspruch 1 gelöst. Auf vorteilhafte Ausgestaltungen nehmen die Unteransprüche Bezug.

Beim erfindungsgemäßen Verfahren ist es vorgesehen, dass der Signalgeber und der Signalempfänger ein kreisförmig begrenztes Messfeld haben, das mit der Größe und dem Profil des Lichtleitkörpers im Wesentlichen übereinstimmt, das konzentrisch auf die Mitte des Außenumfangs der Ferrulen ausgerichtet ist und das allein dieser Anteil des Querschnittes des Lichtleitkörpers zur Kontrolle des Lichtwellenleiters verwendet wird.

Dabei geht die Erfindung aus von der Erkenntnis, dass es technisch äußerst schwierig ist, Lichtwellenleiter eines geringen Durchmessers von z. B. nur 0,2 mm, die einen Lichtleitkörper aus Glas oder Kunststoff haben, fehlerfrei und ohne dass sich zugleich eine Belastung der Signalleitung im Bereich des durch das Abtrennen erhaltenen Endes ergibt, von einem Endlosstrang abzutrennen. Insbesondere treten beim Ablängen von Lichtwellenleitern im Bereich der gebildeten Stirnfläche immer wieder Kantenausbrüche und Abschrägungen auf, die die Signalleitung belastende Spiegelungen und Reflexionen verursachen.

Selbst mikroskopisch kleine Abweichungen der erhaltenen Stirnfläche vom Idealzustand können in dieser Hinsicht zu erheblichen Belastungen der Qualität der Signalleitung führen.

Weitere Probleme können aus unerwünschten Radialverlagerungen bei der Festlegung der Enden eines des Lichtleitkörpers in Bezug auf den Außenumfang einer Ferrule resultieren. Zum einen sind derartige Lichtleitkörper gewöhnlich von mehreren, zumeist von drei, Schutzhüllen umgeben, deren äußerste bei einem Durchmesser des Lichtleitkörpers von beispielsweise 0,2 mm einen Außendurchmesser von 2,3 mm haben kann. Bereits geringe Abweichungen der Schutzhüllen von einem idealen, konzentrischen Aufbau können dadurch zu erheblichen Problemen bei der Signalübertragung über die Stirnflächen des Lichtleitkörpers führen.

Darüber hinaus kann auch die Festlegung der Enden eines solchen Lichtwellenleiters in den zum Anschluss an ein Gerät benötigten Ferrulen zu einer exzentrischen Verlagerung des Lichtleitkörpers führen, beispielsweise dadurch, dass eine solche Ferrule nur auf einer Seite unter Anwendung eines Laserdurchstrahl-Schweißverfahrens mit dem äußeren Mantel des Lichtwellenleiters verschweißt wird, weil die einseitige Erwärmung zu einer teilweise bleibenden, radialen Verschiebung des Lichtleitkörpers führen kann.

Durch das erfindungsgemäß zur Anwendung gelangende, kreisförmig begrenzte Messfeld, das der Signalgeber und der Signalempfänger haben und das mit dem Durchmesser und Profil des Lichtleitkörpers im Wesentlichen übereinstimmt und das konzentrisch auf die Mitte des Außenumfangs der Ferrulen ausgerichtet ist, wird nur derjenige Teilbereich des Querschnittes des Lichtleitkörpers von seinem Gesamtquerschnitt in die Kontrolle eingezogen, der dem Außenumfang der darauf angeordneten Ferrule konzentrisch zugeordnet ist. Dadurch gelingt es, eine neutrale Messung eines jeden Prüflings durchzuführen, die insbesondere unabhängig von der Relativverdrehung der Ferrulen zu reproduzierbaren Werten und führt und es ermöglicht, nach objektiven Kriterien eine gut / schlecht Unterscheidung vorzunehmen und sich wiederholende Fehler zu erkennen und durch qualitätsverbessernde Maßnahmen zu vermeiden. Der bei einer Messung im Einzelnen festzulegende Schwellwert kann in Abhängigkeit von der gewünschten Qualität der Signalleitung willkürlich festgelegt werden und ergibt sich vor allem aus dem gegebenen Anwendungsfall.

Zur Justierung hat es sich bewährt, wenn ein mit Ferrulen bestückter Lichtwellenleiter von idealer geometrischer Auslegung und Signalleitfähigkeit beiderseits in die Anschlussdosen eingeführt wird und wenn die Messfelder derart konzentrisch auf den Lichtleitkörper ausgerichtet werden, dass sich bei einer Relativverdrehung der Ferrulen in Bezug auf die Messfelder keine Veränderung des Signals ergibt. Hierdurch wird zugleich eine völlig konzentrische Zuordnung zur Achse des Lichtleitkörpers erhalten. Wird nachfolgend ein mit einer Ferrule versehener Prüfling in die Anschlussdosen eingeführt, dann kann dieser ebenfalls im Bereich beider Anschlussdosen um seine Achse verdreht werden, ohne dass eine Änderung des Signals auftritt. Das Signal ist dadurch repräsentativ für die Qualität des Prüflings und unmittelbar für die Unterscheidung "gut" - "schlecht" verwendbar. Dabei wird nur derjenige Anteil des Querschnittes eines Lichtleitkörpers zur Signalleitung benutzt, der innerhalb eines Feldes liegt, das dem gedachten Mittelpunkt des Außenumfangs der Ferrulen konzentrisch zugeordnet ist. Anteile des Querschnittes eines Lichtleitkörpers, die außerhalb dieses Teilbereichs der Ferrulen liegen, werden somit bei der Bestimmung der Qualität der Verbindung nicht erfasst. Für die Vermeidung von nur "zufällig" guten oder schlechten Messergebnissen ist das von besonderer Bedeutung.

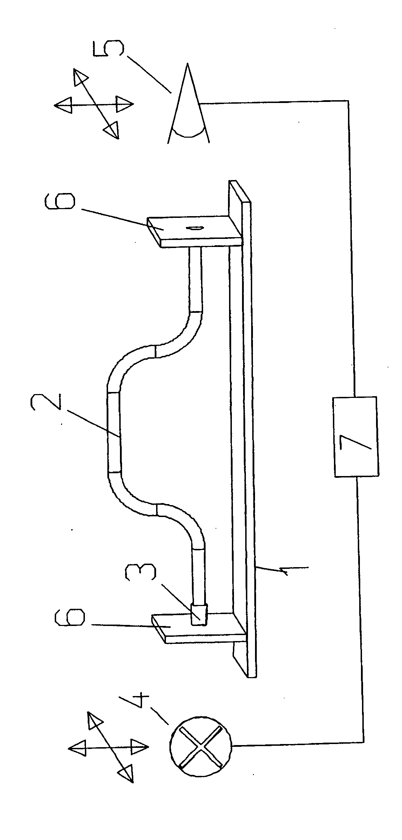

### Kurzbeschreibung der Zeichnung

In der in der Anlage beigefügten Zeichnung ist eine beispielhafte Ausführung der Erfindung wiedergegeben.

### Ausführung der Erfindung

Die in der Zeichnung wiedergegebene Vorrichtung 1 dient zur Kontrolle von kreisförmig begrenzten Lichtwellenleitern 2 mit einem zentral angeordneten Lichtleitkörper, die mit Ferrulen 3 bestückt sind. Die Vorrichtung umfasst einen Sender mit einem Signalgeber 4 und einen Empfänger mit einem Signalempfänger 5, die mit Anschlussdosen 6 versehen sind, in die die Ferrulen 3 signalleitend einführbar sind, wobei der Signalgeber 4 und der Signalempfänger 5 ein kreisförmig begrenztes Messfeld haben, dass mit dem Durchmesser und Profil des Lichtleitkörpers des Lichtwellenleiters 2 im Wesentlichen übereinstimmt und das konzentrisch auf die Mitte des Außenumfangs der Ferrulen 3 ausgerichtet ist. Die Messfelder des Signalgebers 4 und des Signalempfängers 5 sind dabei unabhängig von den Anschlussdosen vertikal und horizontal in Bezug auf die Ferrulen 3 verschiebbar angeordnet.

Zur Justierung der Vorrichtung wird ein mit Ferrulen 3 bestückter Lichtwellenleiter 2 von idealer, geometrischer Auslegung und Signalleitfähigkeit beiderseits in die Anschlussdosen 6 eingeführt, wonach die beiderseitigen Messfelder derart konzentrisch auf den Lichtwellenleiter 2 ausgerichtet werden, dass sich bei einer Relativverdrehung der Ferrulen 3 in Bezug auf die jeweiligen Messfelder keine Veränderung des Signals mehr ergibt. Die Messfelder sind folglich den Lichtleitkörpern der Lichtwellenleiter 2 konzentrisch zugeordnet.

Wird nachfolgend ein Prüfling in gleicher Weise angeschlossen und mit einem Signal beaufschlagt, dann wird vom Empfänger unabhängig von der Relativverdrehung der Ferrulen 3 immer ein gleichbleibendes Signal angezeigt, das hinsichtlich der Güte repräsentativ für die Qualität der Signalleitfähigkeit des Prüflings ist und das es zulässt, eine "gut" - "schlecht" - Bewertung vorzunehmen. Dies kann mit Hilfe einer Auswerteinrichtung 7 EDV - mäßig erfolgen, an die der Signalgeber 4 und der Signalempfänger 5 signalleitend angeschlossen ist und die gegebenenfalls zugleich eine Protokollierung der Messergebnisse erlaubt.

## Patentansprüche

1. Verfahren (1) zur Kontrolle von Lichtwellenleitern (2), die an den Enden mit Ferrulen (3) bestückt sind und einen Lichtleitkörper von kreisförmig begrenztem Profil enthalten, mittels einer Vorrichtung, umfassend einen Sender mit einem Signalgeber (4) und einen Empfänger mit einem Signalempfänger (5), die mit Anschlussdosen (6) versehen sind, in die die Ferrulen (3) signalleitend einführbar sind, wobei der Signalgeber (4) und der Signalempfänger (5) ein kreisförmig begrenztes, mit der Größe und dem Profil des Lichtleitkörpers im Wesentlichen übereinstimmendes Messfeld haben, das konzentrisch auf die Mitte des Außenumfangs der Ferrulen (3) ausgerichtet ist, **dadurch gekennzeichnet, dass** das Verfahren die Schritte aufweist:
- Justierung der Vorrichtung durch beidseitiges Einführen eines mit Ferrulen (3) bestückten Lichtwellenleiter (2) von idealer, geometrischer Auslegung und Signalleitfähigkeit, der einen Lichtleitkörper von kreisförmig begrenztem Profil enthält, in Anschlussdosen (6) und Ausrichten der Messfelder in Bezug auf den Außenumfang der Ferrulen (3) derart konzentrisch auf den Lichtwellenleiter (2), dass sich bei einer Relativverdrehung der Ferrulen (3) in Bezug auf die Messfelder keine Veränderung des Signals ergibt,
- Gut-/schlecht-Unterscheidung von Prüflingen auf Grundlage der so erhaltenen Justierung.

2. Verfahren nach Anspruch 1, **dadurch gekennzeichnet, dass** die Messfelder vertikal und horizontal in Bezug zu den Ferrulen (3) verschiebbar sind.

3. Verfahren nach Anspruch 1 oder 2, **dadurch gekennzeichnet, dass** das Bewerten der Güte des von dem' Signalempfänger (5) empfangenen Signals durch eine EDV Auswerteinrichtung (7) erfolgt, an die der Signalgeber (4) und der Signalempfänger (5) signalleitend angeschlossen sind.

4. Verfahren nach Anspruch 3, **dadurch gekennzeichnet, dass** die EDV Auswerteinrichtung (7) zugleich die Messergebnisse der Bewertung protokolliert.

## Claims

1. Method (1) for the control of optical fibres (2) which are fitted with ferrules (3) at the ends and contain a light-conducting body of circularly limited profile, by means of a device comprising a transmitter having a signal transmitter (4) and a receiver having a signal receiver (5), which are provided with sockets (6) in which the ferrules (3) can be inserted in signal-conducting relationship, wherein the signal transmitter (4) and the signal receiver (5) have a circularly limited measuring field which substantially corresponds to the size and profile of the light-conducting body and which is concentrically aligned with the centre of the outside circumference of the ferrules (3), **characterised in that** the method has the steps of:
- adjusting the device by inserting in sockets (6) on both sides an optical fibre (2) of ideal, geometrical design and signal-conducting capacity which is fitted with ferrules (3) and which contains a light-conducting body of circularly limited profile, and aligning the measuring fields in relation to the outside circumference of the ferrules (3) concentrically with the optical fibre (2) in such a way that, upon relative rotation of the ferrules (3) in relation to the measuring fields, there is no change in the signal,
- distinguishing between good and bad specimens on the basis of the adjustment obtained in this way.

2. Method according to claim 1, **characterised in that** the measuring fields are displaceable vertically and horizontally in relation to the ferrules (3).

3. Method according to claim 1 or 2, **characterised in that** assessment of the quality of the signal received by the signal receiver (5) is effected by a computer evaluating device (7) to which the signal transmitter (4) and the signal receiver (5) are connected in signal-conducting relationship.

4. Method according to claim 3, **characterised in that** the computer evaluating device (7) at the same time logs the measurement results of the assessment.

## Revendications

1. Procédé (1) de contrôle de guides d'ondes lumineuses (2) pourvus de ferrules (3) à leurs extrémités et contenant un corps conducteur à profil délimité circulairement, au moyen d'un dispositif comprenant un émetteur avec un générateur de signaux (4) et un récepteur avec un récepteur de signaux (5) pourvus de boîtes de jonction (6) où les ferrules (3) sont insérables pour la transmission de signaux, le générateur de signaux (4) et le récepteur de signaux (5) présentant un champ de mesure délimité circulairement, correspondant sensiblement à la grandeur et au profil du corps conducteur, et concentrique au centre du contour extérieur des ferrules (3), **caractérisé en ce que** ledit procédé comporte les étapes suivantes :
- réglage du dispositif par insertion dans des boîtes de jonction (6) sur les deux côtés d'un guide d'ondes lumineuses (2) pourvu de ferrules (3) de conception géométrique et de conductivité de signal idéales, contenant un corps conducteur à profil délimité circulairement, et alignement des champs de mesure par rapport au contour extérieur des ferrules (3), concentriquement au guide d'ondes lumineuses (2), de manière à ne produire aucune modification du signal en cas de rotation relative des ferrules (3) par rapport aux champs de mesure,
- distinction bonnes/mauvaises entre pièces à contrôler sur la base du réglage ainsi obtenu.

2. Procédé selon la revendication 1, **caractérisé en ce que** les champs de mesure sont translatables verticalement et horizontalement par rapport aux ferrules (3).

3. Procédé selon la revendication 1 ou 2, **caractérisé en ce que** l'évaluation de la qualité du signal reçu par le récepteur de signaux (5) est réalisée par un dispositif informatique d'analyse (7) auquel le générateur de signaux (4) et le récepteur de signaux (5) sont raccordés pour la transmission de signaux.

4. Procédé selon la revendication 3, **caractérisé en ce que** le dispositif informatique d'analyse (7) enregistre simultanément les résultats de mesure de l'évaluation.
